# EUROPEAN PATENT APPLICATION

(11) **EP 1 897 652 A1**
(43) Date of publication of application: **12.03.2008**
(21) Application number: 07017351.3
(22) Date of filing: 05.09.2007
(51) Int. Cl.: B23K 35/362, B23K 35/02, C08G 69/44, C08K 5/00, H05K 3/34

(54) **Soldering flux and solder paste composition**

(30) Priority: 05.09.2006 JP 2006240229
(71) Applicant: Denso Corporation, Kariya-shi Aichi 448-8661 (JP); HARIMA CHEMICALS, INC., Kakogawa-shi, Hyogo 675-0019 (JP)
(72) Inventor: Yamamoto, Masayasu, Kariya-shi Aichi 448-8661 (JP); Shiomi, Takumi, Kariya-shi Aichi 448-8661 (JP); Nakanishi, Kensuke, Kakogawa-shi Hyogo 675-0019 (JP); Watanabe, Masahiro, Kakogawa-shi Hyogo 675-0019 (JP); Aihara, Masami, Kakogawa-shi Hyogo 675-0019 (JP)
(74) Representative: HOFFMANN EITLE

(57) **Abstract**

A soldering flux contains a base resin and an activating agent. The soldering flux contains, as the activating agent, an oxygen-containing heterocyclic compound having at least one carboxyl group in a molecule. A solder paste composition contains the abovementioned soldering flux and the solder alloy powder. These enable exhibition of excellent wettability to lead-free metals and plating, irrespective of the type of the metals.

## Description

### BACKGROUND OF THE INVENTION

### 1. Field of the Invention

The present invention relates to a soldering flux and a solder paste composition for use in, for example, mounting electronic components on a circuit board. In particular, the present invention relates to a soldering flux and a solder paste composition suitably used for soldering of electronic components such as lead-free plated electrode sections.

### 2. Description of Related Art

Soldering has generally been used to mount electronic components on printed boards. The following two soldering methods have generally been used. In a first method, soldering is performed after an oxide film on a metal surface to be connected is removed by a flux. In a second method, the removal of an oxide film and soldering are performed at the same time by using a solder paste composition that is a mixture of solder alloy powder and flux. The flux used in the first method usually contains a base resin and an activating agent, as well as solvent and the like as needed. This flux is often designed to have a relatively low viscosity so as to be easily applied onto the metal surface. This flux is called a liquid flux. In the second method, the flux used in the solder paste composition is a paste that normally contains a base resin such as rosin, an activating agent and a thixotropic agent, as well as solvent and the like as needed. This flux is kneaded with solder alloy powder.

Usually, different types of plating are applied to the solder connecting portions of electronic components, electrical and electric equipments or the like. Examples of plating applied to the lead sections of electronic components are tin-lead plating, tin-silver plating, tin-copper plating, tin-bismuth plating, gold-plating, palladium plating, and tin plating. Among others, the lead-containing metal plating is preferred in the interest of excellent wettability. For the purpose of ensuring wettability, tin-lead plating has generally been used. There is recently, however, growing interest in environmental issues, and there is a tendency of inhibiting the use of lead not only in solders as a connecting mother material, but also the plating of lead sections and electrode sections in the components. On the other hand, the application of a conventional flux or solder paste composition for soldering of lead-free plated connecting sections has the following problem. That is, it is difficult to ensure the wettability of solder, and poor wettability may deteriorate connecting reliability (for example, electrical reliability).

Consequently, there is a demand for a flux exhibiting excellent wettability to lead-free plating. As a flux of this type, there have been proposed (i) a flux containing a pyrrolidine derivative having a carboxyl group (refer to Japanese Unexamined Patent Application Publication No. 2004-130374), and (ii) a flux containing a compound having at least a carboxyl group being latent in a molecule, and a non-ionic organic halogen compound (refer to Japanese Unexamined Patent Application Publication No. 2004-291019).

Although the fluxes described in these publications No. No. 2004-130374 and No. 2004-291019 are able to improve the wettability to specific metal type plating such as palladium plating or copper plating, these fluxes do not necessarily perform well in the point of wettability to other metals and plating, particularly to copper oxide or nickel plating from which the low wettability has been a problem.

### SUMMARY OF THE INVENTION

A main advantage of the present invention is to provide a soldering flux and a solder paste composition capable of exhibiting excellent wettability to lead-free metals and plating, irrespective of the type of the metals.

The present inventors have made tremendous research effort to solve the abovementioned problem. As the result, they have found a new fact that with respect to all types of lead-free plating, including lead-free nickel plating and the like, to which excellent wettability could not be attained thus far, excellent wettability can be obtained to achieve high connecting reliability (e.g. electrical reliability) by adding, as an activating agent, an oxygen-containing heterocyclic compound having at least one carboxyl group in a molecule.

Specifically, the soldering flux of the present invention contains a base resin and an activating agent. The soldering flux contains, as the activating agent, an oxygen-containing heterocyclic compound having at least one carboxyl group in a molecule.

The solder paste composition of the present invention contains the abovementioned soldering flux and the solder alloy powder.

Accordingly, the present invention is capable of exhibiting excellent wettability to lead-free metals and plating, irrespective of the type of the metals. Hence, to electronic components made up of parts subjected to plating of various types of metals, soldering can be similarly performed with excellent wettability, and it is easy to achieve excellent connecting reliability such as electrical reliability. Thus, an improvement in soldering quality can be expected, and the frequency of occurrence of defects due to poor wettability can be lowered, so that a reduction of the soldering costs is permitted.

Other objects and advantages of the present invention will become more apparent from the following detailed description of the present invention.

### DESCRIPTION OF PREFERRED EMBODIMENTS

A preferred embodiment of the present invention is described below in detail.

A soldering flux of the present invention (hereinafter, in some cases, referred to simply as a "flux") contains a base resin and an activating agent. The activating agent functions to remove an oxide film on a metal surface during the time of soldering, thereby realizing excellent solder wettability. The base resin functions as a binder for uniformly applying the activating agent to the metal.

No special limitations are imposed on the base resin used in the flux of the present invention. It is possible to use rosin and its derivative, or synthetic resins conventionally and normally used in fluxes. Examples of the rosin include usual gum rosin, tall oil rosin, and wood rosin. As their derivatives, there are polymerized rosin, acrylated rosin, hydrogenated rosin, disproportionated rosin, formylated rosin, rosin ester, rosin modified maleic acid resin, rosin modified phenol resin, and rosin modified alkyd resin. Examples of the synthetic resin include acrylic resin, styrene-maleic acid resin, epoxy resin, urethane resin, polyester resin, phenoxy resin, and terpene resin.

The content of the base resin is, without limitation, preferably 0.5 to 80% by weight, more preferably 2 to 60% by weight, to the total amount of the flux.

The flux of the present invention contains, as an activating agent, an oxygen-containing heterocyclic compound having at least one carboxyl group in a molecule (hereinafter referred to, in some cases, as an "oxygen-containing heterocyclic compound containing a carboxyl group"). This enables excellent wettability to lead-free metals and plating, irrespective of the type of the metals. In the present invention, the oxygen-containing heterocyclic compound means compounds having an oxygen atom in a heterocyclic ring structure. That is, the oxygen-containing heterocyclic compound containing a carboxyl group in the present invention is a compound having at least one carboxyl group and having a heterocyclic ring structure containing an oxygen atom, in a molecule. The number of carboxyl groups in the oxygen-containing heterocyclic compound containing a carboxyl group is preferably 1 to 5, more preferably 1 to 3, furthermore preferably 1 to 2, and most preferably 1.

Examples of the oxygen-containing heterocyclic compound containing a carboxyl group are 1,3-dioxolane-4-methyl-2-propionic acid (2,5-dioxo-4-methyl-3-pyrroline-3-propionic acid), 2-cumarone carboxylic acid, 2-pyrone-6-carboxylic acid, 5-hydroxy-4-pyrone-2-carboxylic acid, and 4-pyrone-2,6-dicarboxylic acid. In addition to these, there are ones having a five-membered ring structure selected from the group consisting of furan, hydrofuran and oxazol. Examples thereof include 2-furan carboxylic acid, 5-methyl-2-furan carboxylic acid, 3-(2-furil) acrylic acid, 2,5-dimethyl-3-furan carboxylic acid, 2,5-furan dicarboxylic acid, 4-butanolid-3-carboxylic acid, tetrahydrofuran-2-carboxylic acid, and 4-oxazol carboxylic acid. Especially preferred is one having the five-membered ring structure selected from the group consisting of furan, hydrofuran and oxazol, because of high reactivity to metals. Only one or at least two types of oxygen-containing heterocyclic compounds containing a carboxyl group may be used.

The content of the oxygen-containing heterocyclic compound containing a carboxyl group is preferably 0.1 to 50% by weight, more preferably 0.5 to 20% by weight, to the total amount of the flux. Below 0.1% by weight, the effect of improving wettability may be insufficient. Above 50% by weight, the film-forming property of the flux may be lowered and hydrophilic property may be increased, so that insulating property tend to fall, resulting in poor reliability. In a combination of at least two oxygen-containing heterocyclic compounds containing a carboxyl group, the total amount thereof may be within the abovementioned range.

Alternatively, in addition to the oxygen-containing heterocyclic compound containing a carboxyl group, it is possible to use, as an activating agent, a heterocyclic compound having at least one carboxyl group in a molecule, where a heteroatom in the heterocyclic ring is nitrogen or sulfur, instead of oxygen. The combined use of a nitrogen-containing or sulfur-containing heterocyclic compound containing a carboxyl group can further improve wettability to some metal plating such as palladium plating and nickel plating.

As a nitrogen-containing or sulfur-containing heterocyclic compound containing a carboxyl group, there are, for example, 2-thiophene carboxylic acid, 2-pyrrol carboxylic acid, 2,3-dimethyl pyrrol-4-propyonic acid, 2,5-dioxyo-4-methyl-3-pyrolin-3-propyonic acid, 1-methylpyrrolidine-2-carboxylic acid, 5-carboxy-1-methylpyrrolidine-2-acetic acid, 3-indoleacetic acid, nicotinic acid, picolinic acid, pyridine dicarboxylic acid, 2-quinoline carboxylic acid, 2-amino-3-(4-imidazolyl) propionic acid, and prolin. When containing these nitrogen-containing or the sulfur-containing heterocyclic compound containing a carboxyl group, the content thereof is preferably 0.1 to 20% by weight to the total amount of the flux.

As an activating agent, other normally used activating agent may be used together. Examples thereof include amines (diphenylguanidine, naphthylamine, diphenylamine, triethanol amine, monoethanol amine, etc); amine salts (organic acid salts or inorganic acid (mineral acid such as hydrochloric acid and sulfuric acid) salts of polyamines such as ethylenediamine, or of amines such as cyclohexyl amine, ethyl amine, diethyl amine); organic acids (dicarboxylic acids such as succinic acid, adipic acid, glutaric acid, sebacic acid and maleic acid; fatty acids such as myristic acid, palmitic acid, stearic acid and oleic acid; hydroxy carboxylic acids such as lactic acid, dimethylol propionic acid and malic acid; benzoic acid, phthalic acid and trimellitic acid); and amino acids (glycine, alanine, aspartic acid, glutamic acid and valine). When these other activating agents are contained, the content thereof is preferably not more than 30% by weight to the total amount of the flux..

The flux of the present invention can also contain a thixotropic agent as needed, in addition to the base resin and the activating agent as described above. Alternatively, the flux of the present invention may also contain a suitable organic solvent as needed.

Examples of the thixotropic agent include cured castor oil, bees wax, carnauba wax, stearic acid amide, and hydroxy stearic acid ethylene bisamide. The content of the thixotropic agent is preferably 1.0 to 25% by weight to the total amount of the flux.

Examples of the organic solvent include alcohol based solvents such as ethyl alcohol, isopropyl alcohol, ethyl cellosolve, butyl carbitol and hexyl carbitol; ester based solvents such as ethyl acetate and butyl acetate; and hydrocarbon based solvents such as toluene and turpentine oil. When the flux of the present invention is used as a liquid flux, isopropyl alcohol is particularly preferred in the points of volatility and the solubility of the activating agent. On the other hand, when the flux of the present invention is applied to a solder paste composition, ethers of polyhydric alcohol, such as butyl carbitol or hexyl carbitol having a high boiling point, are commonly employed and preferred. The content of the organic solvent is preferably 20 to 99% by weight to the total amount of the flux. Below 20% by weight, the viscosity of the flux might be increased, so that the coating property of the flux, and the printability when used as a solder paste composition tend to deteriorate. On the other hand, if the organic solvent exceeds 99% by weight, the effective component (a base resin or the like) as the flux might be relatively reduced, so that solderability might be lowered.

In addition to the abovementioned respective components, the flux of the present invention can also contain, in such a range as not to impair the effect of the present invention, oxidation inhibitor, rust inhibitor, chelating agent etc may be added as needed.

A solder paste composition of the present invention contains the abovementioned flux of the present invention and the solder alloy powder.

No special limitations are imposed on the solder alloy powder. For example, tin-lead alloy generally used, or tin-lead alloy further containing silver, bismuth, or indium may be used. However, taking into consideration that the present invention aims at improving the wettability to lead-free plating, it is desirable to use lead-free alloys such as the alloys based on tin-silver, tin-copper or tin-silver-copper. The particle size of the solder alloy powder is preferably about 5 to 50µm.

The weight ratio of the flux and the solder alloy power in the solder paste composition of the present invention may be suitably set in accordance with the necessary use and function of a solder paste. That is, flux : solder alloy powder, is preferably about 5:95 to 20:80, without special limitations.

The solder paste composition of the present invention is applied onto a board by a dispenser, screen printing or the like, in the solder connection of electronic equipment parts and the like. After the application, preheating is carried out at, for example, about 150°C to 200°C, followed by reflow at about a maximum temperature of 170°C to 250°C. The application and the reflow with respect to the board may be performed in the atmosphere, or alternatively an inactive atmosphere of the gas such as nitrogen, argon, or helium.

### EXAMPLES

The present invention will be described below in further detail with reference to Examples and Comparative

### Examples.

### Examples 1 to 6 and Comparative Examples 1 to 4

The respective compositions shown in Table 1-1 and Table 1-2 were mixed in the blending composition shown in Table 1-1 and Table 1-2. Sufficiently applying heat, the mixture was dissolved uniformly to obtain individual fluxes.

The obtained respective fluxes were evaluated in the following manners. The results are shown in Table 1-1 and Table 1-2.

### [Solderability Test]

SOP (shrink outline package) parts were prepared where a glass epoxy board provided with a SOP pattern of 0.8mm pitch having 20 leads is subjected to various types of plating (tin plating, nickel plating, palladium plating, gold plating, silver plating, tin-copper alloy plating, and tin-bismuth alloy plating) by using thermosetting resin. The flux was applied after 10 pieces of these SOP parts were temporarily fixed to each type of plating (70 pieces in total). The board after applying the flux was then soldered by a wave soldering machine. With a stereoscopic microscope of 20 times, the SOP parts were then observed to judge whether de-wetting occurred at the electrode sections of the parts. If de-wetting occurred, the number thereof (the number of occurrences of defects) was counted. A value that expresses, by percentage, the ratio of the number of occurrences of the defects to the total number of the SOP patterns each of plating(200 leads) was obtained as a percentage of defects (%), and evaluated. In the above soldering, solder alloy powder composed of Sn-Ag-Cu alloy (Sn:Ag:Cu = 96.5 . 3.0 : 0.5 (weight ratio) was used.

### [Insulation Resistance Test]

The flux was applied to a comb type board (II type) as defined in JIS-Z-3197. After applying the flux, soldering was performed by a wave soldering machine. The resulting board was left in a thermo-hygrostat having a temperature of 85°C and a humidity of 85%. With time (at the beginning, after 500 hours, and after 1000 hours), the resistance value (Ω) was measured to evaluate an insulation resistance as electrical reliability. In the above soldering, solder alloy powder composed of Sn-Ag-Cu alloy (Sn:Ag:Cu = 96.5 : 3.0 : 0.5 (weight ratio) was used.

In Table 1-1 and Table 1-2, for example, the resistance value at the beginning of Example 1, 5 × 10¹³Ω, is represented by "5E13." Those of other examples are represented in this manner.

**Table 1 -1**

| | | Example | | | | | |
|---|---|---|---|---|---|---|---|
| | | 1 | 2 | 3 | 4 | 5 | 6 |
| Flux Composition (% by weight) | Gum rosin | 9.1 | 8.9 | 5.1 | 4.9 | 4.8 | 4.6 |
| | Acrylic resin | - | - | 4.0 | 4.0 | 4.0 | 4.0 |
| | 3-(2-Furil) acrylic acid | 0.8 | 0.5 | 0.8 | 0.5 | 0.8 | 0.5 |
| | 3-Indole acetic acid | - | 0.5 | - | 0.5 | - | 0.5 |
| | Adipic acid | - | - | - | - | - | - |
| | Prolin | - | - | - | - | - | - |
| | Diphenylamine | - | - | - | - | 0.3 | 0.3 |
| | Ethylamine hydrochloride | 0.1 | 0.1 | 0.1 | 0.1 | 0.1 | 0.1 |
| | Isopropyl alcohol | 90.0 | 90.0 | 90.0 | 90.0 | 90.0 | 90.0 |
| Solderability Test (Percentage of defects(%)) | Tin plating | 0 | 0 | 0 | 0 | 0 | 0 |
| | Nickel plating | 1.5 | 1.0 | 2.0 | 2.0 | 1.5 | 1.5 |
| | Palladium plating | 1.0 | 0.5 | 1.5 | 0.5 | 1.0 | 0.5 |
| | Gold plating | 0 | 0 | 0 | 0 | 0 | 0 |
| | Silver plating | 0 | 0 | 0 | 0 | 0 | 0 |
| | Tin-copper alloy plating | 0 | 0 | 0 | 0 | 0 | 0 |
| | Tin-bismuth alloy plating | 0 | 0 | 0 | 0 | 0 | 0 |
| Insulation Resistance Test(Ω) | Beginning | 5E13 | 6E13 | 7E13 | 6E13 | 4E13 | 5E13 |
| | After 500 hours | 5E9 | 5E9 | 6E9 | 4E9 | 5E9 | 4E9 |
| | After 1000 hours | 6E9 | 5E9 | 5E9 | 6E9 | 4E9 | 4E9 |

**Table 1 -2**

| | | Comparative Example | | | |
|---|---|---|---|---|---|
| | | 1 | 2 | 3 | 4 |
| Flux Composition (% by weight) | Gum rosin | 9.1 | 4.8 | 9.1 | 4.8 |
| | Acrylic resin | - | 4.0 | - | 4.0 |
| | 3-(2-Furil) acrylic acid | - | - | - | - |
| | 3-Indole acetic acid | - | - | - | - |
| | Adipic acid | 0.8 | 0.8 | - | - |
| | Prolin | - | - | 0.8 | 0.8 |
| | Diphenylamine | - | 0.3 | - | 0.3 |
| | Ethylamine hydrochloride | 0.1 | 0.1 | 0.1 | 0.1 |
| | Isopropyl alcohol | 90.0 | 90.0 | 90.0 | 90.0 |
| Solderability Test (Percentage of defects(%)) | Tin plating | 1.0 | 1.5 | 1.5 | 1.5 |
| | Nickel plating | 50.5 | 53.0 | 47.5 | 47.5 |
| | Palladium plating | 36.0 | 37.0 | 6.5 | 5.0 |
| | Gold plating | 18.5 | 20.5 | 17.0 | 17.0 |
| | Silver plating | 2.5 | 3.0 | 2.0 | 2.0 |
| | Tin-copper alloy plating | 8.0 | 9.0 | 8.0 | 8.0 |
| | Tin-bismuth alloy plating | 0.5 | 1.0 | 0 | 0 |
| Insulation Resistance | Beginning | 6E13 | 5E13 | 3E13 | 3E13 |
| | After 500 hours | 5E9 | 3E9 | 5E9 | 5E9 |
| | After 1000 hours | 6E9 | 5E9 | 4E9 | 4E9 |

### Examples 7 to 12 and Comparative Examples 5 to 8

The respective compositions shown in Table 2-1 and Table 2-2 were mixed in the blending composition shown in Table 2-1 and Table 2-2. Sufficiently applying heat, the mixture was dissolved uniformly to obtain individual fluxes.

Subsequently, each of the obtained fluxes and solder alloy powder (38 to 25µm in particle size) composed of Sn-Ag-Cu alloy (Sn:Ag:Cu = 96.5 : 3.0 : 0.5 (weight ratio)) were mixed at the ratio of flux : solder alloy powder = 11:89 (weight ratio), thereby obtaining individual solder paste compositions.

The obtained respective solder paste compositions were evaluated in the following manners. The results are shown in Table 2-1 and Table 2-2.

### [Solder Wettability Test]

On a board provided with a QFP (quad flat package) pattern of 0.8mm pitch having 100 leads, each solder paste composition was printed using a 200µm thick metal mask having the same pattern. Separately, there were prepared QFP parts subjected to various types of plating (tin plating, nickel plating, palladium plating, gold plating, silver plating, tin-copper alloy plating, and tin-bismuth alloy plating). On the above printed paste, 10 pieces of these QFP parts were mounted for each plating (70 pieces in total). Within 10 minutes after the mounting, preheating was performed at 175±5°C for 80±5 seconds in the atmosphere, followed by reflow at a maximum temperature of 235±5°C. With a stereoscopic microscope of 20 times, the resulting parts were observed to judge whether de-wetting occurred. If de-wetting occurred, the number thereof (the number of occurrences of defects) was counted. A value that expresses, by percentage, the ratio of the number of occurrences of the defects to the total number of the QFP patterns each of plating(1000 leads) was obtained as a percentage of defects (%), and evaluated.

### [Insulation Resistance Test]

The solder paste composition was printed on a comb type board (II type) as defined in JIS-Z-3197, by using a 100µm thick metal mask having the same pattern. Within 10 minutes after the printing, preheating was performed at 175±5°C for 80±5 seconds in the atmosphere, followed by reflow at a maximum temperature of 235±5°C. The resulting board was then left in a thermo-hygrostat having a temperature of 85°C and a humidity of 85%. With time (at the beginning, after 500 hours, and after 1000 hours), the resistance value (Ω) was measured to evaluate an insulation resistance as electrical reliability. In Table 2-1 and Table 2-2, for example, the resistance value at the beginning of Example 7, 6 × 10¹³Ω, is represented by "6E13." Those of other examples are represented in this manner.

**Table2-1**

| | | Example | | | | | |
|---|---|---|---|---|---|---|---|
| | | 7 | 8 | 9 | 10 | 11 | 12 |
| Gum rosin | | 63.0 | 63.0 | 33.0 | 33.0 | 32.0 | 32.0 |
| Acrylic resin | | - | - | 30.0 | 30.0 | 29.0 | 29.0 |
| Cured castor oil | | 6.0 | 6.0 | 6.0 | 6.0 | 6.0 | 6.0 |
| 2-Furan Flux carboxylic acid | | 3.6 | 1.8 | 3.6 | 1.8 | 3.6 | 1.8 |
| Composition 2-Pyrrol (% by weight) carboxylic acid | | - | 1.8 | - | 1.8 | - | 1.8 |
| Sebacic acid | | - | - | - | - | - | - |
| Prolin | | - | - | - | - | - | - |
| Naphthylamine | | - | - | - | - | 2.0 | 2.0 |
| Ethylamine hydrochloride | | 0.4 | 0.4 | 0.4 | 0.4 | 0.4 | 0.4 |
| Hexyl carbitol | | 27.0 | 27.0 | 27.0 | 27.0 | 27.0 | 27.0 |
| Flux:Solder alloy powder (Weight ratio) | | 11:89 | 11:89 | 11:89 | 11:89 | 11:89 | 11:89 |
| Solder Wettability Test of (Percentage defects(%)) | Tin plating | 0 | 0 | 0 | 0 | 0 | 0 |
| | Nickel plating | 2.5 | 1.5 | 2.5 | 2.5 | 1.0 | 1.5 |
| | Palladium plating | 2.0 | 2.0 | 1.5 | 1.0 | 1.5 | 1.0 |
| | Gold plating | 0 | 0 | 0.5 | 0 | 0 | 0 |
| | Silver plating | 0 | 0 | 0 | 0 | 0 | 0 |
| | Tin-copper alloy plating | 0 | 0 | 0 | 0 | 0 | 0 |
| | Tin-bismuth alloy plating | 0 | 0 | 0 | 0 | 0 | 0 |
| Insulation Resistance Test(Ω) | Beginning | 6E13 | 5E13 | 5E13 | 7E13 | 5E13 | 6E13 |
| | After 500 hours | 4E9 | 5E9 | 4E9 | 5E9 | 6E9 | 5E9 |
| | After 1000 hours | 5E9 | 6E9 | 5E9 | 6E9 | 6E9 | 7E9 |

**Table 2-2**

| | | Comparative Example | | | |
|---|---|---|---|---|---|
| | | 5 | 6 | 7 | 8 |
| Flux Composition (% by weight) | Gum rosin | 63.0 | 32.0 | 63.0 | |
| | Acrylic resin | - | 29.0 | - | 29.0 |
| | Cured castor oil | 6.0 | 6.0 | 6.0 | 6.0 |
| | 2-Furan carboxylic acid | - | - | - | - |
| | 2-Pyrrol carboxylic acid | - | - | - | - |
| | Sebacic acid | 3.6 | 3.6 | - | - |
| | Prolin | - | - | 3.6 | 3.6 |
| | Naphthylamine | - | 2.0 | - | 2.0 |
| | Ethylamine hydrochloride | 0.4 | 0.4 | 0.4 | 0.4 |
| | Hexylcarbitol | 27.0 | 27.0 | 27.0 | 27.0 |
| Flux:Solder alloy powder (Weight ratio) | | 11:89 | 11:89 | 11:89 | 11:89 |
| Solder Wettability Test (Percentage of defects(%)) | Tin plating | 0.5 | 1.0 | 0.5 5 | 0.5 |
| | Nickel plating | 52.0 | 54.0 | 50.5 | 50.5 |
| | Palladium plating | 40.5 | 38.5 | 8.0 | 7.0 |
| | Gold plating | 13.5 | 11.0 | 10.5 | 10.5 |
| | Silver plating | 1.5 | 1.5 | 1.0 | 1.0 |
| | Tin-copper alloy plating | 7.5 | 6.5 | 5.0 | 5.0 |
| | Tin-bismuth alloy plating | 0 | 0.5 | 0 | 0 |
| Insulation Resistance Test (Ω) | Beginning | 5E13 | 6E13 | 4E13 | 4E13 |
| | After 500 hours | 3E9 | 6E9 | 4E9 | 4E9 |
| | After 1000 hours | 4E9 | 5E9 | 3E9 | 3E9 |

It can be said from Tables 1-1, 1-2,2-1 and 2-2 that the respective fluxes of Examples, containing 3-(2-furil) acrylic acid or 2-furan carboxylic acid as an oxygen-containing heterocyclic compound containing a carboxyl group, are extremely excellent. This is because they substantially similarly exhibit excellent wettability to the element electrodes subjected to the various plating, and also had excellent insulation resistance after elapsing of 1000 hours, with regard to the electrical reliability after connection.

While one preferred embodiment of the present invention has been described, the present invention is not limited to the above embodiment.

## Claims

1. A soldering flux comprising a base resin and an activating agent, wherein, as the activating agent, an oxygen-containing heterocyclic compound having at least one carboxyl group in a molecule is contained.

2. The soldering flux according to claim 1, wherein the oxygen-containing heterocyclic compound has a five-membered ring structure selected from the group consisting of furan, hydrofuran and oxazol.

3. The soldering flux according to claim 1, wherein the content of the oxygen-containing heterocyclic compound is 0.1 to 50% by weight to a total amount of the flux.

4. The soldering flux according to claim 1, further containing, as the activating agent, at least one of a nitrogen-containing heterocyclic compound and a sulfur-containing heterocyclic compound, the compounds containing at least one carboxyl group in a molecule.

5. The soldering flux according to claim 4, wherein the content of at least one of the nitrogen-containing heterocyclic compound and the sulfur-containing heterocyclic compound is 0.1 to 20% by weight to a total amount of the flux.

6. A solder paste composition comprising the soldering flux according to claim 1 and the solder alloy powder.

7. The solder paste composition according to claim 6, wherein the solder alloy powder is a lead-free alloy.
